# EUROPEAN PATENT APPLICATION

(11) **EP 2 848 809 A1**
(43) Date of publication of application: **18.03.2015**
(21) Application number: 13769450.1
(22) Date of filing: 22.03.2013
(51) Int. Cl.: F04B 1/22, E02F 9/20, F03C 1/253, F04B 9/02, F04B 17/03, F15B 21/14, F16H 39/14

(54) **FLUID PRESSURE DRIVE UNIT**

(30) Priority: 29.03.2012 JP 2012075527
(71) Applicant: Kayaba Industry Co., Ltd., Tokyo 105-6111 (JP)
(72) Inventor: SUZUKI, Kazunari, Tokyo 105-6111 (JP); NARITA, Susumu, Tokyo 105-6111 (JP); SUGIMOTO, Junichiro, Tokyo 105-6111 (JP)
(74) Representative: Grünecker, Kinkeldey, Stockmair & Schwanhäusser
(86) International application number: PCT/JP2013/058253
(87) International publication number: WO 2013/146575

(57) **Abstract**

A fluid pressure drive unit is to supply a working fluid to and drive a fluid pressure actuator. The fluid pressure drive unit includes a fluid pressure pump for suctioning and discharging the working fluid, an electric motor arranged in parallel to the fluid pressure pump, the electric motor for driving and rotating the fluid pressure pump, and a power transmission mechanism for transmitting a power between a rotation shaft of the fluid pressure pump and a rotation shaft of the electric motor.

## Description

### TECHNICAL FIELD

The present invention relates to a fluid pressure drive unit adapted to supply a working fluid to and driving a fluid pressure actuator.

### BACKGROUND ART

Conventionally, in a construction machine such as a power shovel, a hybrid structure in which a power generator is rotated by an extra output of an engine and emission energy of an actuator, electric power generated by the power generator is stored, and actuation of the actuator is assisted by using the stored electric power is used. In such a hybrid structure, a fluid pressure drive unit including an electric motor to be rotated with the stored electric power, and an assist pump to be driven and rotated by the electric motor, the assist pump for discharging a working fluid and assisting the actuation of the actuator by a main pump is used.

JP2011-127569A discloses an assist regeneration device including a motor generator to be actuated and rotated with electric energy, a regeneration motor for driving and rotating the motor generator with energy of a working fluid, and an assist pump to be driven and rotated by the motor generator, the assist pump for discharging the working fluid.

### SUMMARY OF INVENTION

However, in the assist regeneration device of JP2011-127569A, the motor generator, the regeneration motor, and the assist pump are provided on the same axis and coupled in series. Therefore, there is a fear that the entire length of a fluid pressure drive unit is extended.

The present invention is achieved in consideration with the above problem, and an object thereof is to improve mountability of the fluid pressure drive unit.

According to one aspect of the present invention, a fluid pressure drive unit adapted to supply a working fluid to and driving a fluid pressure actuator is provided. The fluid pressure drive unit includes a fluid pressure pump that is configured to suction and discharge the working fluid, an electric motor arranged in parallel to the fluid pressure pump, the electric motor that is configured to drive and rotate the fluid pressure pump, and a power transmission mechanism that is configured to transmit a power between a rotation shaft of the fluid pressure pump and a rotation shaft of the electric motor.

The details as well as other features and advantages of the present invention are set forth in the remainder of the specification and are shown in the accompanying drawings.

### BRIEF DESCRIPTION OF DRAWINGS

[Fig. 1] Fig. 1 is a front view of a fluid pressure drive unit according to an embodiment of the present invention.
[Fig. 2] Fig. 2 is a sectional view by line II-II of a fluid pressure pump motor in Fig. 1.
[Fig. 3] Fig. 3 is a sectional view of a plate and a power transmission mechanism in Fig. 1.

### DESCRIPTION OF EMBODIMENTS

Hereinafter, referring the drawings, a hydraulic drive unit 100 serving as a fluid pressure drive unit according to an embodiment of the present invention will be described. In the hydraulic drive unit 100, working oil is used as a working fluid. It should be noted that instead of the working oil, other fluids such as working water may be used as the working fluid.

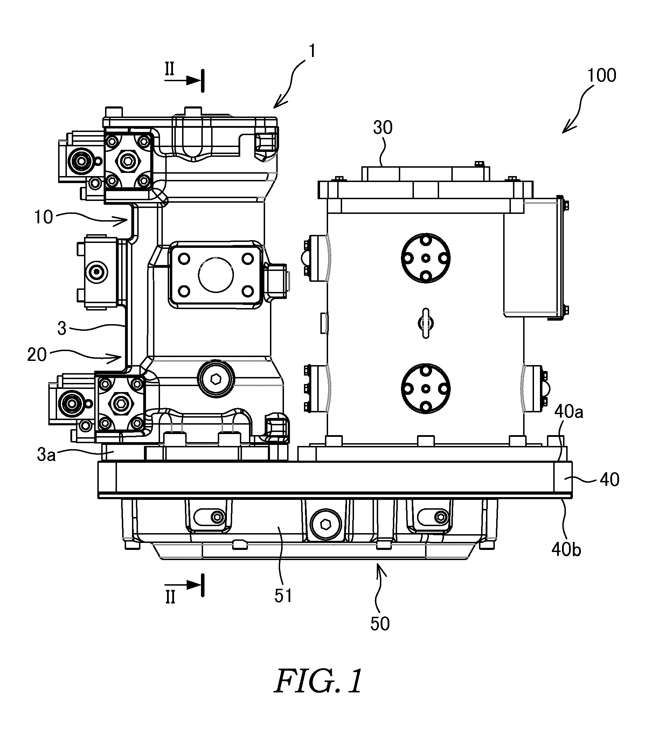

Firstly, referring to Figs. 1 to 3, a configuration of the hydraulic drive unit 100 will be described.

The hydraulic drive unit 100 is to supply the working oil to and drive a hydraulic actuator (not shown) serving as a fluid pressure actuator. The hydraulic drive unit 100 is applied to a hybrid construction machine such as a power shovel for driving the hydraulic actuator with the working oil discharged from a main hydraulic pump (not shown) which is driven by a prime mover.

As shown in Fig. 1, the hydraulic drive unit 100 is provided with a hydraulic pump motor 1 serving as a fluid pressure pump motor which includes a hydraulic pump 10 serving as a fluid pressure pump for suctioning and discharging the working oil, and a hydraulic motor 20 serving as a fluid pressure motor to be driven and rotated with the supplied working oil.

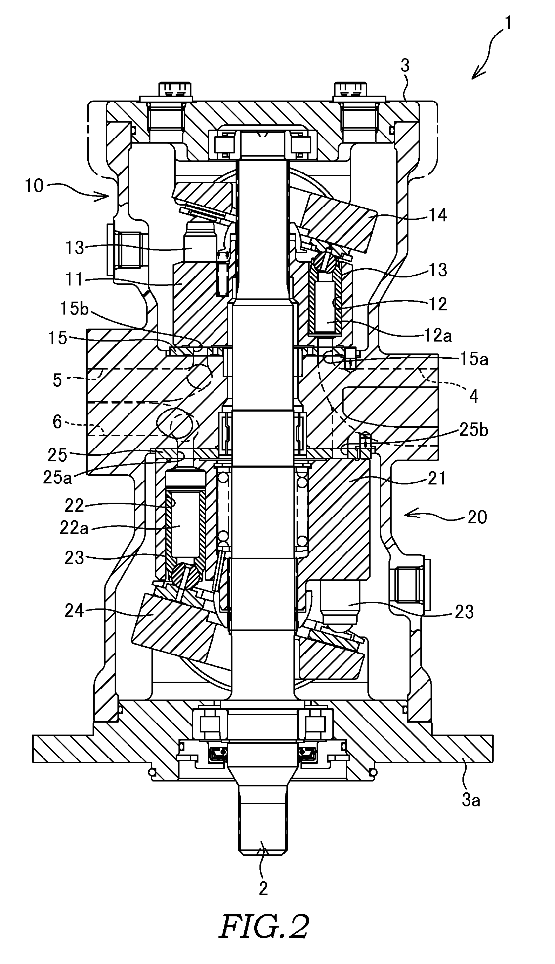

The hydraulic drive unit 100 is also provided with an electric motor 30 arranged in parallel to the hydraulic pump motor 1, a plate 40 having an identical surface to which the hydraulic pump motor 1 and the electric motor 30 are attached, and a power transmission mechanism 50 for transmitting a power between a rotation shaft 2 (refer to Fig. 2) of the hydraulic pump motor 1 and a rotation shaft (not shown) of the electric motor 30.

The hydraulic pump 10 and the hydraulic motor 20 forming the hydraulic pump motor 1 are respectively swash-plate-type variable piston pump motors. The hydraulic motor 20 is a piston pump motor of a larger scale than the hydraulic pump 10.

As shown in Fig. 2, the hydraulic pump motor 1 is provided with a casing 3 for accommodating the hydraulic pump 10 and the hydraulic motor 20, and the single rotation shaft 2 rotatably and axially supported on the casing 3 and commonly used for the hydraulic pump 10 and the hydraulic motor 20.

The casing 3 has a flange portion 3a fastened to the plate 40 by bolts. The casing 3 has a supply and emission passage 4 through which the working oil to be supplied to the hydraulic pump 10 flows and the working oil emitted from the hydraulic motor 20 flows, a discharge passage 5 through which the working oil discharged from the hydraulic pump 10 flows, and a return passage 6 through which the working oil returned from the hydraulic actuator, to be supplied to the hydraulic motor 20 flows.

The supply and emission passage 4 communicates with a tank (not shown) in which the working oil is stored. The discharge passage 5 and the return passage 6 communicate with the hydraulic actuator. The supply and emission passage 4 is provided to oppose the discharge passage 5 and the return passage 6.

The hydraulic pump 10 and the hydraulic motor 20 are arranged to oppose each other in the axial direction of the rotation shaft 2 across the supply and emission passage 4, the discharge passage 5, and the return passage 6.

The hydraulic pump 10 suctions the working oil of the supply and emission passage 4 and discharges to the discharge passage 5. The hydraulic pump 10 assists drive of the hydraulic actuator by the main hydraulic pump with the discharged working oil. The hydraulic pump 10 is provided with a cylinder block 11 coupled to the rotation shaft 2, a plurality of pistons 13 respectively accommodated in a plurality of cylinders 12 which is defined in the cylinder block 11, a swash plate 14 for letting the pistons 13 in sliding contact reciprocate, and a port plate 15 to be brought into sliding contact with an end surface of the cylinder block 11.

The cylinder block 11 is formed into a substantially columnar shape, and rotated integrally with the rotation shaft 2. The cylinder block 11 is driven and rotated by the rotation shaft 2. In the cylinder block 11, the plurality of cylinders 12 is formed in parallel with the rotation shaft 2.

The cylinders 12 are arranged on an identical circumference of the cylinder block 11 centering on the rotation shaft 2 in an annular manner at fixed intervals. The pistons 13 are inserted into the respective cylinders 12, and volume chambers 12a are defined between the cylinders and the pistons 13. The volume chambers 12a communicate with the port plate 15 through communication holes.

When the cylinder block 11 is rotated together with the rotation shaft 2, the pistons 13 are brought into sliding contact with the swash plate 14. Thereby, the pistons 13 reciprocate in the cylinders 12 in accordance with a tilting angle of the swash plate 14, and hence extend and contract the volume chambers 12a.

The swash plate 14 is provided in such a manner that the tilting angle is adjustable by a capacity switching actuator (not shown). The swash plate 14 is tiltable into a state shown in Fig. 2 from a state where the swash plate is perpendicular to the rotation shaft 2 with the tilting angle of zero. The tilting angle of the swash plate 14 is steplessly adjusted by the capacity switching actuator.

The port plate 15 is formed into a disc shape, and has a through hole into which the rotation shaft 2 is inserted in center thereof. The port plate 15 has a supply port 15a formed into an arc shape centering on the rotation shaft 2, the supply port providing communication between the supply and emission passage 4 and the volume chambers 12a, and a discharge port 15b similarly formed into an arc shape centering on the rotation shaft 2, the discharge port providing communication between the discharge passage 5 and the volume chambers 12a.

In the hydraulic pump 10, a region where the pistons 13 are brought into sliding contact with the swash plate 14 and the volume chambers 12a are extended is a suctioning region, and a region where the pistons 13 are brought into sliding contact with the swash plate 14 and the volume chambers 12a are contracted is a discharging region. The supply port 15a is formed in correspondence with the suctioning region, and the discharge port 15b is formed in correspondence with the discharging region. Thereby, in accordance with rotation of the cylinder block 11, the working oil is suctioned into the volume chambers 12a facing the supply port 15a, and the working oil is discharged from the volume chambers 12a facing the discharge port 15b.

The hydraulic motor 20 is driven and rotated with the working oil emitted from the hydraulic actuator. The hydraulic motor 20 is provided with a cylinder block 21 coupled to the rotation shaft 2, a plurality of pistons 23 respectively accommodated in a plurality of cylinders 22 which is defined in the cylinder block 21, a swash plate 24 for letting the pistons 23 in sliding contact reciprocate, and a port plate 25 to be brought into sliding contact with an end surface of the cylinder block 21. The cylinder block 21, the cylinders 22, the pistons 23, and the swash plate 24 of the hydraulic motor 20 only have different size from the configurations of the above hydraulic pump 10 but have the same configurations. Thus, description thereof is omitted.

The port plate 25 is formed into a disc shape, and has a through hole into which the rotation shaft 2 is inserted in center thereof. The port plate 25 has a supply port 25a formed into an arc shape centering on the rotation shaft 2, the supply port 25a providing communication between the return passage 6 and volume chambers 22a, and an emission port 25b similarly formed into an arc shape centering on the rotation shaft 2, the emission port 25b providing communication between the supply and emission passage 4 and the volume chambers 22a.

In the hydraulic motor 20, a region where the pistons 23 are brought into sliding contact with the swash plate 24 and the volume chambers 22a are extended is a suctioning region, and a region where the pistons 23 are brought into sliding contact with the swash plate 24 and the volume chambers 22a are contacted is an emitting region. The supply port 25a is formed in correspondence with the suctioning region, and the emission port 25b is formed in correspondence with the emitting region. Thereby, in accordance with rotation of the cylinder block 21, the working oil is suctioned into the volume chambers 22a facing the supply port 25a, and the working oil is emitted from the volume chambers 22a facing the emission port 25b.

The electric motor 30 drives and rotates the hydraulic pump 10, and is capable of generating regenerative electric power by rotation of the hydraulic motor 20. The electric power generated in the electric motor 30 is stored in an electric power storage device (not shown). The electric motor 30 drives and rotates the hydraulic pump 10 by using the regenerative electric power regenerated by the rotation of the hydraulic motor 20 and stored in the electric power storage device.

As shown in Fig. 1, the plate 40 is a plate shape member having one surface 40a to which the hydraulic pump motor 1 and the electric motor 30 are attached, and the other surface 40b to which a casing 51 of the power transmission mechanism 50 is attached. Thereby, the power transmission mechanism 50 is provided to oppose the hydraulic pump motor 1 and the electric motor 30 across the plate 40. In the plate 40, a through hole (not shown) through which the rotation shaft 2 of the hydraulic pump motor 1 passes, and a through hole (not shown) through which a rotation shaft of the electric motor 30 passes are formed.

As described above, in the hydraulic drive unit 100, the hydraulic pump motor 1 and the electric motor 30 are arranged in a U form through the plate 40 and the power transmission mechanism 50. Therefore, as the hydraulic pump motor 1 and the electric motor 30 are arranged in parallel, the entire length of the hydraulic drive unit 100 can be shortened. Thus, mountability of the hydraulic drive unit 100 to the hybrid construction machine can be improved.

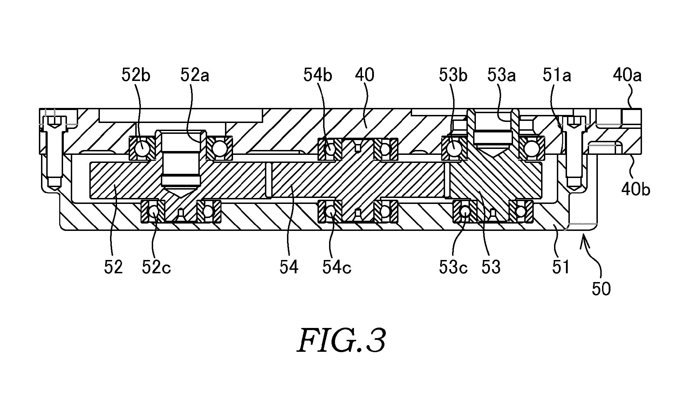

As shown in Fig. 3, the power transmission mechanism 50 is provided with the casing 51 fixed to the plate 40, a first gear 52 to be rotated integrally with the rotation shaft 2 of the hydraulic pump motor 1, a second gear 53 to be rotated integrally with the rotation shaft of the electric motor 30, and an idle gear 54 provided between the first gear 52 and the second gear 53, the idle gear for transmitting the power.

The casing 51 accommodates the first gear 52, the second gear 53, and the idle gear 54. The casing 51 is fastened by bolts in a state where an opening end surface 51a is abutted with the other surface 40b of the plate 40. Lubricant oil is charged inside the casing 51.

The first gear 52 has a recessed portion 52a formed on a rotation shaft, the recessed portion 52a into which the rotation shaft 2 of the hydraulic pump motor 1 is inserted and fitted. Thereby, the first gear 52 is rotated integrally with the rotation shaft 2 of the hydraulic pump motor 1. In the first gear 52, one end of the rotation shaft is rotatably and axially supported on the plate 40 by a first bearing 52b, and the other end of the rotation shaft is rotatably and axially supported on the casing 51 by a second bearing 52c.

Similarly, the second gear 53 has a recessed portion 53a formed on a rotation shaft, the recessed portion 53a into which the rotation shaft of the electric motor 30 is inserted and fitted. Thereby, the second gear 53 is rotated integrally with the rotation shaft of the electric motor 30. In the second gear 53, one end of the rotation shaft is rotatably and axially supported on the plate 40 by a first bearing 53b, and the other end of the rotation shaft is rotatably and axially supported on the casing 51 by a second bearing 53c.

The idle gear 54 is respectively meshed with the first gear 52 and the second gear 53 and transmits the power between the gears. In the idle gear 54, one end of a rotation shaft is rotatably and axially supported on the plate 40 by a first bearing 54b, and the other end of the rotation shaft is rotatably and axially supported on the casing 51 by a second bearing 54c.

In such a way, by providing the idle gear 54 between the first gear 52 and the second gear 53, even in a case where the hydraulic pump motor 1 and the electric motor 30 are relatively distant from each other, diameters of the first gear 52 and the second gear 53 are suppressed from being large. Therefore, the power transmission mechanism 50 can be downsized, and the entire hydraulic drive unit 100 can be downsized.

By adjusting a gear ratio between the first gear 52 and the second gear 53, a reduction ratio between the hydraulic pump motor 1 and the electric motor 30 can be set to be a proper value.

Next, actions of the hydraulic drive unit 100 will be described.

In a case where the hydraulic drive unit 100 assists the drive of the hydraulic actuator by the main hydraulic pump, the electric motor 30 is rotated by using the electric power preliminarily stored in the electric power storage device. By rotation of the electric motor 30, the rotation shaft 2 of the hydraulic pump motor 1 is driven and rotated via the power transmission mechanism 50.

Regarding the hydraulic pump 10, the tilting angle of the swash plate 14 is switched to have a predetermined value which is more than zero by the capacity switching actuator. In the hydraulic pump 10, in accordance with the rotation of the cylinder block 11, the pistons 13 reciprocate in the cylinders 12. By this reciprocation of the pistons 13, the working oil from the tank is suctioned into the volume chambers 12a through the supply port 15a of the port plate 15. The working oil discharged from the volume chambers 12a is guided to the discharge passage 5 through the discharge port 15b of the port plate 15.

Thereby, the working oil discharged from the hydraulic drive unit 100 is supplied for the drive of the hydraulic actuator, and assists the drive of the hydraulic actuator by the main hydraulic pump.

At this time, the hydraulic motor 20 is retained in such a manner that a tilting angle of the swash plate 24 becomes zero by the capacity switching actuator. Therefore, since the pistons 23 do not reciprocate in the cylinders 22, a displacement volume by the pistons 23 becomes zero. Thus, since the hydraulic motor 20 does not supply and emit the working oil but only runs idle, a drive loss of the hydraulic motor 20 is suppressed.

Meanwhile, in a case where the regenerative electric power is generated with the working oil emitted from the hydraulic actuator, regarding the hydraulic motor 20, the tilting angle of the swash plate 24 is switched to be a predetermined value which is more than zero by the capacity switching actuator. In the hydraulic motor 20, in accordance with the rotation of the cylinder block 21, the pistons 23 reciprocate in the cylinders 22. By this reciprocation of the pistons 23, the pressurized working oil returned from the hydraulic actuator through the return passage 6 flows into the volume chambers 22a through the supply port 25a of the port plate 25. The pistons 23 reciprocate in the cylinders 22, and the cylinder block 21 is driven and rotated. The working oil flowing into the volume chambers 22a is emitted to the supply and emission passage 4 through the emission port 25b of the port plate 25, and refluxed to the tank.

The rotation shaft 2 is rotated integrally with the cylinder block 21. Rotation of the rotation shaft 2 is transmitted to the rotation shaft of the electric motor 30 via the power transmission mechanism 50. Thereby, the electric motor 30 can generate and store the regenerative electric power in the electric power storage device.

At this time, the hydraulic pump 10 is retained in such a manner that the tilting angle of the swash plate 14 becomes zero by the capacity switching actuator. Therefore, since the pistons 13 do not reciprocate in the cylinders 12, a displacement volume by the pistons 13 becomes zero. Thus, since the hydraulic pump 10 does not supply and emit the working oil but only runs idle, a drive loss of the hydraulic pump 10 is suppressed.

It should be noted that in a case where the hydraulic drive unit 100 assists supply of the working oil to a plurality of hydraulic actuators by the main hydraulic pump, there is sometimes a case where drive of one hydraulic actuator is assisted and the working oil is refluxed from other hydraulic actuators.

According to the above embodiment, the following effects are obtained.

The hydraulic pump motor 1 and the electric motor 30 are arranged in parallel and attached to the plate 40, and the power transmission mechanism 50 transmits the power between the rotation shaft 2 of the hydraulic pump motor 1 and the rotation shaft of the electric motor 30. Therefore, as the hydraulic pump motor 1 and the electric motor 30 are arranged in parallel, the entire length of the hydraulic drive unit 100 can be shortened. Thus, the mountability of the hydraulic drive unit 100 can be improved.

In the power transmission mechanism 50, by providing the idle gear 54 between the first gear 52 and the second gear 53, the diameters of the first gear 52 and the second gear 53 can be small. Therefore, even in a case where the hydraulic pump motor 1 and the electric motor 30 are relatively distant from each other, the diameters of the first gear 52 and the second gear 53 are suppressed from being large. Thus, the power transmission mechanism 50 can be downsized, and the entire hydraulic drive unit 100 can be downsized.

Embodiments of the present invention were described above, but the above embodiments are merely examples of applications of the present invention, and the technical scope of the present invention is not limited to the specific constitutions of the above embodiments.

For example, the hydraulic drive unit 100 is to assist the drive of the hydraulic actuator by the main hydraulic pump. However, instead of this, the hydraulic actuator may be driven by using only the hydraulic drive unit 100.

Both the hydraulic pump 10 and the hydraulic motor 20 are swash-plate-type piston pump motors. However, as long as the motors are variable motors in which a suction and discharge capacity is adjustable to be zero, the hydraulic pump and the hydraulic motor may be other types.

This application claims priority based on Japanese Patent Application No. 2012-075527 filed with the Japan Patent Office on March 29, 2012, the entire contents of which are incorporated into this specification.

The embodiments of the present invention in which an exclusive property or privilege is claimed are defined as follows:

## Claims

1. A fluid pressure drive unit adapted to supply a working fluid to and driving a fluid pressure actuator, comprising:
a fluid pressure pump that is configured to suction and discharge the working fluid;
an electric motor arranged in parallel to the fluid pressure pump, the electric motor that is configured to drive and rotate the fluid pressure pump; and
a power transmission mechanism that is configured to transmit a power between a rotation shaft of the fluid pressure pump and a rotation shaft of the electric motor.

2. The fluid pressure drive unit according to claim 1, further comprising:
a plate having an identical surface to which the fluid pressure pump and the electric motor are attached, the plate through which the rotation shaft of the fluid pressure pump and the rotation shaft of the electric motor pass.

3. The fluid pressure drive unit according to claim 1, wherein
the power transmission mechanism includes:
a first gear that is configured to rotate integrally with the rotation shaft of the fluid pressure pump;
a second gear that is configured to rotate integrally with the rotation shaft of the electric motor; and
an idle gear provided between the first gear and the second gear, the idle gear is configured to transmit the power.

4. The fluid pressure drive unit according to claim 1, further comprising:
a fluid pressure motor that is configured to be driven and rotated with the supplied working fluid, using a rotation shaft common to the rotation shaft of the fluid pressure pump, wherein
the electric motor is capable of generating regenerative electric power by rotation of the fluid pressure motor.

5. The fluid pressure drive unit according to claim 4, to be applied to a hybrid construction machine in which the fluid pressure actuator is driven with a working fluid discharged from a main fluid pressure pump which is driven by a prime mover, wherein
the fluid pressure motor is configured to be driven and rotated with the working fluid emitted from the fluid pressure actuator,
the electric motor that is configured to generate the regenerative electric power by the rotation of the fluid pressure motor, and is configured to drive and rotate the fluid pressure pump by using the regenerative electric power, and
the fluid pressure pump that is configured to assist drive of the fluid pressure actuator by the main fluid pressure pump with the discharged working fluid.
